# FASCICULE DE BREVET EUROPEEN

(11) **EP 1 694 126 B1**
(45) Date de publication et mention de la délivrance du brevet: **08.09.2010**
(21) Numéro de dépôt: 04821090.0
(22) Date de dépôt: 15.10.2004
(51) Int. Cl.: A01N 47/20

(54) **SOLUTIONS DE CIPC ET D'UN TERPENE OU D'UNE HUILE TERPENIQUE ET LEURS UTILISATIONS POUR LE TRAITEMENT ANTIGERMINATIF DE BULBES OU TUBERCULES**
CIPC-LÖSUNGEN UND EIN TERPEN ODER EIN TERPENÖL SOWIE DEREN VERWENDUNG IN DER KEIMUNGSHEMMENDEN BEHANDLUNG VON ZWIEBELN ODER KNOLLEN
CIPC SOLUTIONS AND A TERPENE OR A TERPENE OIL AND USE THEREOF FOR ANTI-GERMINATING TREATMENT OF BULBS OR TUBERS

(30) Priorité: 18.12.2003 FR 0314908
(43) Date de publication de la demande: 30.08.2006
(73) Titulaire: XEDA INTERNATIONAL S.A., 13670 Saint-Andiol (FR)
(72) Inventeur: SARDO, Alberto, F-13160 CHATEAURENARD (FR)
(74) Mandataire: Colombet, Alain André
(86) Numéro de dépôt international: PCT/FR2004/002651
(87) Numéro de publication internationale: WO 2005/067718

(56) Documents cités:
- WO-A-00/32054
- FR-A- 2 778 065
- US-A- 5 436 226
- US-A- 5 811 372

## Description

La présente invention concerne des solutions de CIPC et d'un ou plusieurs terpènes ou huiles terpéniques pour le traitement antigerminatif des bulbes et tubercules. Cette utilisation est particulièrement appropriée pour le traitement des tubercules de pommes de terre.

Après la récolte des pommes de terre ou autres tubercules, celles-ci sont conservées à des températures de l'ordre de 20° à 30°C pendant environ dix jours afin de durcir leur couche péridermique (ou "peau"), puis progressivement refroidies jusqu'à leur température de conservation qui est d'environ 10°C.

Pendant les premier et deuxième mois suivant leur récolte, les tubercules restent à l'état de repos et présentent peu de tendances à la germination.

Cependant, avant la fin de cette période, les tubercules doivent être traités chimiquement afin d'inhiber la germination qui serait responsable d'effets néfastes, tels qu'une perte de poids, une conservation de l'amidon en sucre et une diminution de la qualité des tubercules ainsi qu'une détérioration de leur apparence. En outre, les germes ainsi que les tissus avoisinants contiennent des taux élevés de glycoalcaloïdes toxiques qui ne sont pas détruits au cours de la cuisson.

Les procédés de traitement antigerminatif les plus utilisés mettent en oeuvre des agents chimiques tels que le chloropropham ou encore dénommé chlorpropham, CIPC ou 3-chlorophénylisopropylcarbamate. En général, le CIPC est appliqué aux tubercules stockés au moyen de techniques de thermonébulisation. Généralement, la thermonébulisation met en oeuvre l'application de CIPC au moyen d'un courant d'air chaud afin de produire un aérosol.

Selon une première pratique, la thermonébulisation est effectuée au moyen de CIPC pur. Cependant, cette technique entraîne l'application de la matière active pure, de façon non satisfaisante sur les tubercules. En effet, le CIPC a tendance à former des amas et/ou ne se répartit pas uniformément sur les tubercules.

Selon une autre pratique, le CIPC est formulé en milieu solvant, tel que le chlorure de méthylène ou l'alcool méthylique. Là encore, cette technique ne donne pas de résultats satisfaisants dans la mesure où les solvants habituellement utilisés présentent des points d'ébullition faibles et ont tendance à s'évaporer rapidement lors de la thermonébulisation. Ceci aboutit à l'application de matière active pure présentant les mêmes inconvénients que la technique précédente.

Il a été tenté d'appliquer le CIPC avec des composés terpéniques purs. Toutefois, lors de ces tentatives, le CIPC et le composé terpénique sont appliqués successivement sur les pommes de terre traitées. Les difficultés de répartition du CIPC sur les tubercules précitées subsistent donc.

Le document WO 98/52414 concerne une méthode d'inhibition des germes de tubercules incluant l'utilisation de CIPC et de carvone, cinéole, jasmone ou limonène.

Le document FR 2 778 065 décrit l'utilisation d'une combinaison de CIPC et d'une huile, préférentiellement de soja, pour inhiber la germination des pommes de terre. Un exemple de solution décrit une solution comprenant 30,61 % en masse de CIPC et 58,39 % d'huile de soja.

US 5,436,226 concerne un procédé pour l'inhibition de la germination des tubercules par utilisation d'un jasmonate. Le CIPC est cité parmi une liste d'inhibiteurs pouvant être associé à celui-ci.

WO 00/32054 décrit un procédé anti-germinatif de tubercules et de bulbes comprenant l'utilisation d'une composition à base d'eugénol ou d'isoeugénol.

Par ailleurs, le CIPC est difficilement soluble dans les solvants classiques, et des concentrations maximales de CIPC de l'ordre de 30 % (poids/volume) sont en général obtenues. Au mieux, des concentrations de l'ordre d'environ 54 % à 180°C ont été obtenues. Cette faible solubilité implique donc l'utilisation de quantités importantes de solvant et/ou de formulation afin d'obtenir les quantités de formule active requises. Or, on cherche en général à limiter l'utilisation de ces solvants du fait de leur toxicité propre et/ou du danger d'utilisation qu'ils impliquent, notamment du fait de leurs bas points d'ébullition qui entraînent des risques importants d'inflammabilité.

L'utilisation de dérivés synthétiques pour l'application des fruits et légumes durant leur croissance ou stockage est limitée. En particulier, les taux du CIPC font l'objet de régulations de plus en plus sévères. Par conséquent, alors que le CIPC est utilisé pour limiter la formation de germes sur les tubercules, sa toxicité pourrait remettre son utilisation aux doses habituelles en question. Par conséquent, on cherche à limiter au minimum la quantité de CIPC à appliquer aux bulbes et tubercules.

Enfin, les formulations disponibles de CIPC présentent une mauvaise stabilité, surtout à basse température, ce qui les rend Impropres au stockage, notamment dans les chambres froides de stockage des bulbes et/ou tubercules.

Il a maintenant été découvert, et c'est l'un des objets de la présente invention, que l'eugénol, isoeugénol ou huile de girofle ont un haut pouvoir solvant du CIPC. En particulier, l'utilisation de tels terpènes et/ou huiles terpéniques permet d'obtenir des solutions limpides de CIPC et d'atteindre des concentrations de CIPC supérieures à 50% en poids de CIPC par rapport au volume total de la solution, à température ambiante, voire des températures aussi basses que 0°C. Par conséquent, les formulations de la présente invention permettent de limiter la quantité de produit formulé à utiliser.

D'autre part, les solutions selon l'invention mettent en oeuvre des terpènes ou huiles terpéniques à température d'ébullition élevée, de préférence supérieure à 230°C, encore plus préférentiellement supérieure à 240°C. Ainsi, cette température d'ébullition élevée permet d'effectuer la thermonébulisation à plus haute température, assurant un meilleur brouillard et donc une meilleure répartition sur les bulbes et/ou tubercules traités. Aussi, le composé terpénique ou l'huile ne se dégrade pas ou peu et/ou forme un brouillard de bonne qualité lors de la thermonébulisation, permettant ainsi une meilleure répartition sur le tubercule traité.

Par ailleurs, ces points d'ébullition élevés permettent ainsi de réduire le risque d'inflammabilité par rapport aux solvants classiques généralement utilisés dans les formulations de CIPC, où les solvants seraient totalement vaporisés.

D'autre part, les solutions selon l'invention sont parfaitement stables jusqu'à plusieurs mois, de préférence au moins un mois, à basse température, de préférence jusqu'à 0°C. Ceci permet donc aux utilisateurs de stocker les formulations de CIPC dans les chambres froides.

Les terpènes et/ou huiles terpéniques présentent une activité biocide propre contre les champignons et bactéries qui attaquent la pomme de terre. Ils permettent donc d'améliorer les propriétés des formulations de CIPC.

Enfin, la combinaison desdits terpènes et/ou huiles terpéniques avec le CIPC peut potentialiser l'effet antigerminatif des formulations.

Selon un premier objet, la présente invention concerne les solutions de CIPC contenant de l'eugénol, isoeugénol, huile de girofle, leurs sels et/ou leurs mélanges.

Selon un aspect préféré, lesdites solutions contiennent de 50 à 80 % en poids de CIPC, de préférence 60 à 70 %, encore plus préférentiellement 62 à 65%.

Selon un autre aspect préféré, lesdites solutions contiennent de 30 à 60 % en poids d'eugénol, isoeugénol, huile de girofle, de leurs sels et/ou leurs mélanges, de préférence entre 30 et 40 % en poids.

Selon un autre aspect préféré, lesdites solutions de l'invention contiennent également un ou plusieurs émulsifiants, plus préférentiellement un émulsifiant non ionique. Généralement, lesdites solutions contiennent de 0 à 20 % en poids d'émulsifiant.

Dans ce qui précède et ce qui suit, les pourcentages sont en poids/volume par rapport au volume total de la composition.

Selon un autre objet, la présente invention concerne également la méthode de traitement des bulbes ou tubercules, notamment de pommes de terre, au moyen de la solution selon l'invention, plus préférentiellement le traitement antigerminatif et/ou biocide.

Selon un autre objet, la présente invention concerne également l'utilisation d'un terpène, choisi parmi l'eugénol, isoeugénol, huile de girofle, de leurs sels et/ou leurs mélanges pour solubiliser le CIPC.

Selon un autre objet, la présente demande concerne encore le procédé de préparation de formulations dé CIPC, comprenant l'étape consistant à solubiliser du CIPC en présence d'eugénol, isoeugénol, huile de girofle, de leurs sels et/ou leurs mélanges.

Des sels particulièrement préférés sont notamment les sels de métaux alcalins, tels que les sels de sodium, les sels de lithium et les sels de potassium.

Selon un mode de réalisation particulièrement préféré, le terpène est sous forme de sel ou d'un mélange de sels acceptable sur le plan alimentaire. Dans ce cas, en effet, on observe une plus faible volatilité du terpène. De cette façon, la durée de protection des tubercules et bulbes après application de la solution selon l'invention se trouve prolongée.

Selon la présente invention, on entend par "émulsifiant" tout type d'agent habituellement utilisé à cet effet, tels que les alcools gras éthoxylés, les acides gras éthoxylés, les alkylphénols éthoxylés ou tout autre produit non ionique.

La solution selon l'invention peut être appliquée sur les tubercules et bulbes en utilisant l'une quelconque des méthodes connues dans la technique, notamment par brossage, immersion, aspersion, atomisation, douchage ou thermonébulisation. De préférence, la solution est appliquée par thermonébulisation, à température comprise entre 230 et 250°C. Cette technique est connue en soi.

L'application peut être continue ou intermittente au cours de la durée du stockage.

De préférence, l'application est répétée dans l'enceinte de stockage tous les deux mois environ.

Bien entendu, on peut ajouter à la composition selon l'invention un ou plusieurs agents réduisant l'évaporation du principe actif. De tels agents sont connus dans la technique et peuvent être notamment choisis parmi les polyterpènes dispersables dans l'eau, les esters de glycérol de la résine de pin, les gommes laques, les lécithines, les huiles sicatives, l'alcool polyvinylique, la polyvinyle pyrrolidone, les polyacrylates de métaux alcalins, la gomme arabique.

La composition peut en outre contenir des tensioactifs variés connus en soi.

La formulation finale de la solution selon l'invention peut dépendre de la méthode utilisée pour son application sur les bulbes et tubercules et de la nature des produits traités. Elle peut être préparée par des méthodes connues en soi.

La solution selon l'invention est préparée de façon conventionnelle par solubilisation de CIPC en présence d'eugénol, isoeugénol, huile de girofle, de leurs sels et/ou leurs mélanges, éventuellement sous agitation.

Lorsque la composition traitante comprend un sel acceptable sur le plan alimentaire, celui-ci peut être introduit dans la composition lors de sa préparation sous forme de sel ou sous forme neutre. Dans cette dernière hypothèse, le sel est formé *in situ* par addition d'une base appropriée, telle qu'un hydroxyde de métal alcalin (soude ou potasse).

La quantité de la solution selon l'invention devant être appliquée aux tubercules et bulbes dépend essentiellement de la méthode d'application sélectionnée. En général, on applique au total, sur une période de 6 mois, de 20 à 30 g, de préférence de 25 à 28 g de CIPC par tonne de bulbes ou tubercules traités. Plus généralement, on ajuste la quantité appliquée de principe actif en fonction de la durée de stockage.

Les exemples suivants sont donnés à titre illustratif et non limitatif de la présente invention.

### EXEMPLE 1

Une solution selon l'invention a été préparée de la façon suivante :
60 g de CIPC (commercialisé par Luxan Holland) ont été ajoutés à 36 g d'eugénol (commercialisé par Charabot). Le mélange est agité jusqu'à obtention d'une solution limpide. A titre d'émulsifiant, 11 moles d'alcool laurique éthoxylé ont été ajoutés à une concentration de 4 g pour 100 g. La solution obtenue a une concentration de 636 g/l de CIPC et 380 g/l d'eugénol.

A titre comparatif, une solution habituellement utilisée de CIPC dans le chlorure de méthylène présente une concentration de 30 % en poids/volume.

### EXEMPLE 2

L'efficacité des solutions selon l'invention et les compositions de CIPC de l'art antérieur dans le traitement antigerminatif de tubercules de pommes de terre a été évaluée de la façon suivante.

### A. Solution de exemple 1 à 636 g de CIPC

Les applications sont réalisées par thermonébulisation à 240°C à l'aide de l'Electrofog XEDA. Pour chaque notation, des échantillons en sacs filets sont placés au centre des caisses parmi les tubercules de remplissage pour en être extraits aux dates souhaitées aux fins d'analyse.

### B. Formulation à 200 g/l de CIPC dans un mélange de solvants hydrosolubles, eau et agents mouillants organiques

Les applications sont réalisées par thermonébulisation à 180°C de la formulation à l'aide d'un appareil électrique (Electrofog XEDA) avec une première application 15 jours à 3 semaines après le remplissage de la cellule. Pour chaque date, des échantillons de tubercules, placés en sacs filets individuels, sont enfouis dans des caisses réparties dans la cellule de stockage de façon homogène. A la date choisie, ceux-ci en sont extraits pour être notés.

### C. CIPC sous forme de poudre (1 %)

Pour chaque date de notation, l'application est réalisée individuellement sur des échantillons d'au moins 50 tubercules convenablement pesés et placés dans des sacs de papier kraft. Le poudrage est réalisé à la surface des tubercules placés dans le sac qui est ensuite refermé et agité. Ils sont disposés dans des palox de la cellule VCP maintenue à la température de consigne pour être sortis à la date voulue. La dose retenue pour les essais efficacité est de 5 ppm par période de conservation de 3 mois.

### D. Témoin Non Traité

Pour chaque date de notation, des échantillons de tubercules non traités sont placés dans des sacs de papier kraft disposés dans des caisses palettes bien individualisées et conservées dans la cellule VCP. Cette cellule est gérée à la même température de consigne et les caisses y sont maintenues durant toute la période de conservation puis sont sorties pour les notations à la date voulue.

Les conditions d'application des formulations A, B, C, D sont résumées dans le tableau 1 suivant.

**Tableau 1 : Essais efficacité à 6 mois - Produits et doses appliqués**

| **Condition** | **Matière active** | **Concentration** | **Dose** | **Dose matlère active** | **Technique d'application** | **Dates d'application** | **Conditions expérimentales** | |
|---|---|---|---|---|---|---|---|---|
| | | | | | | | **T° du tas** | **Etat germination** |
| A | CIPC | 636 g/l | 19 ml/t | 12 ppm | Thermonébulisation à 240°C 15 j à 20 j après la mise en stockage puis toutes les 6 à 8 semaines | 1^{er} traitement le | | Début point |
| | | | puis 13 ml/t | puis 8 ppm | | 9/11 | 8°C | blanc |
| | | | puis 13 ml/t | puis 8 ppm | | 2^{e} traitement le | | germes |
| | | | | | | 22/12 | 7,4°C | < 2 mm |
| | | | | | | 3° traitement le | | |
| | | | | | | 2/02 | 7,5°C | |
| | | | Total = 45 ml/t | Total = 28 ppm | | | | |
| B | CIPC | 200 g/l | 60 ml/t puis | 12 ppm | Thermonébulisation à 180°C 15 j à 20 j après la mise en stockage puis toutes les 6 à 8 semaines | 1^{er} traitement le | | Début point |
| | | | 40 ml/t puis | puis 8 ppm | | 9/11 | 8,3°C | blanc |
| | | | 30 ml/t | puis 6 ppm | | 2^{e} traitement le | | Point blanc |
| | | | | | | 27/12 | 7,6°C | |
| | | | | | | 3° traitement le | | |
| | | | | | | 21/02 | 7,7°C | |
| | | | Total = 130 ml/t | Total = 26 ppm | | | | |
| C | CIPC | 1 % | 1.0kg/t | 10 ppm | Poudrage à la mise en sacs | Le 20/10 | | |
| D | | | | | | | | |

Les résultats sur les variétés Bintje et Nicola sont résumés dans les tableaux 2 et 3 suivants.

**Tableau 2 : Efficacité antigerminative à 6 mois - Variété Bintje**

| **Spécialité** | **Abs germes** | **Point blanc** | **< 2 mm** | **2-5 mm** | **> 5 mm** | **> 2 mm** | **Indice germination** | **Poids germes** | **Pertes de poids** |
|---|---|---|---|---|---|---|---|---|---|
| A | 3.3 | 82.2 | 9.0 | 4.1 | 1.4 | 5.5 | 9.7 | 0.7 | 3.7 |
| B | 3.1 | 83.9 | 7.0 | 3.6 | 2.5 | 6.1 | 10.4 | 0.7 | 5.2 |
| C | 0.0 | 46.8 | 31.3 | 11.1 | 10.8 | 21.9 | 22.6 | 19.9 | 6.5 |
| D | 0.0 | 8.0 | 26.5 | 28.3 | 37.2 | 65.5 | 52.6 | 39.9 | 6.5 |
| Signification | HS | HS | HS | HS | HS | HS | HS | S | HS |
| C. V. (en %) | 124.5 | 18.6 | 57.1 | 37.6 | 114.5 | 65.0 | 56.9 | 156.6 | 8.8 |

**Tableau 3 : Efficacité antigerminative à 6 mois - Variété Nicola**

| **Spécialité** | **Abs germes** | **Point blanc** | **< 2 mm** | **2-5 mm** | **> 5 mm** | **> 2 mm** | **Indice germination** | **Poids germes** | **Pertes de poids** |
|---|---|---|---|---|---|---|---|---|---|
| A | 5.6 | 75.9 | 11.7 | 5.2 | 1.6 | 6.84 | 10.3 | 0.1 | 5.7 |
| B | 1.7 | 73.7 | 19.5 | 3.6 | 1.5 | 5.05 | 10.4 | 0.4 | 6.5 c |
| C | 0.3 | 44.4 | 39.2 | 7.5 | 8.6 | 16.14 | 19.8 | 12.3 | 8.3 |
| D | 0.0 | 3.1 | 13.8 | 19.7 | 63.4 | 83.14 | 73.4 | 122.1 | 8.9 |
| Signification | HS | HS | HS | HS | HS | HS | HS | HS | HS |
| C. V. (en %) | 41.1 | 15.0 | 42.0 | 48.5 | 37.5 | 26.5 | 21.3 | 94.6 | 5.9 |

| | | | | | | | | | |
|---|---|---|---|---|---|---|---|---|---|
| HS : hautement significatif ; S : significatif ; C.V. coefficient de variation. | | | | | | | | | |

Ces résultats montrent que les solutions selon l'invention permettent d'obtenir des résultats comparables tout en diminuant très fortement la quantité de produit appliqué.

### EXEMPLE 3

La stabilité des solutions de l'invention et des compositions de l'art antérieur a été étudiée.

La solution de l'exemple 1 à 63,6 % (poids/volume) de CIPC a été maintenue à 0°C pendant un mois. La solution est restée parfaitement limpide.

Une formulation à 25 % de CIPC dans un mélange de solvants organiques hydrosolubles, eau et agents mouillants stockée à 0°C pendant un mois est trouble et présente des cristaux.

## Revendications

1. Solution de 3-chlorophénylisopropylcarbamate (CIPC) contenant de l'eugénol, isoeugénol, huile de girofle, leurs sels et/ou leurs mélanges.

2. Solution selon la revendication 1 telle que ladite solution contient de 50 à 80 % en poids de CIPC par rapport au volume total de la solution.

3. Solution selon la revendication 1 ou 2 telle que ladite solution contient de 30 à 60 % en poids d'eugénol, isoeugénol, huile de girofle, de leurs sels et/ou leurs mélanges, par rapport au volume total de la solution.

4. Solution selon l'une quelconque des revendications précédentes, telle que ladite solution contient de 30 à 40 % en poids d'eugénol, isoeugénol, huile de girofle, de leurs sels et/ou leurs mélanges, par rapport au volume total de la solution.

5. Solution selon l'une quelconque des revendications précédentes, telle que ladite solution contient un ou plusieurs émulsifiants.

6. Solution selon l'une quelconque des revendications précédentes, telle que ladite solution contient un émulsifiant non ionique.

7. Solution selon l'une quelconque des revendications 1 à 4, telle que ladite solution contient de 0 à 20 % en poids d'émulsifiant.

8. Solution selon l'une quelconque des revendications précédentes contenant de l'eugénol.

9. Solution de CIPC selon l'une quelconque des revendications précédentes contenant de l'huile de girofle.

10. Méthode de traitement des bulbes ou tubercules, au moyen de la solution selon l'une quelconque des revendications précédentes.

11. Méthode selon la revendication 10, pour le traitement antigerminatif des pommes de terre.

12. Méthode selon la revendication 10 ou 11, telle que ladite solution est appliquée par thermonébulisation.

13. Méthode selon l'une quelconque des revendications 10, 11 ou 12, telle que la solution est appliquée à température comprise entre 230 et 250°C.

14. Utilisation de **l'eugénol, isoeugénol ou un de leurs sels ou leur mélange, ou de l'huile de girofle** pour solubiliser le CIPC.

15. Procédé de préparation de solutions de CIPC, comprenant l'étape consistant à solubiliser du CIPC en présence d'eugénol, isoeugénol, huile de girofle, de leurs sels et/ou leurs mélanges.

## Claims

1. Solution of isopropyl (3-chlorophenyl)carbamate (CIPC) containing eugenol, isoeugenol, clove oil, salts thereof and/or mixtures thereof.

2. Solution according to claim 1, wherein said solution contains from 50 to 80 % by weight of CIPC relative to the total volume of the solution.

3. Solution according to either claim 1 or claim 2, wherein said solution contains from 30 to 60 % by weight of eugenol, isoeugenol, clove oil, salts thereof and/or mixtures thereof relative to the total volume of the solution.

4. Solution according to any one of the preceding claims, wherein said solution contains from 30 to 40 % by weight of eugenol, isoeugenol, clove oil, salts thereof and/or mixtures thereof relative to the total volume of the solution.

5. Solution according to any one of the preceding claims, wherein said solution contains one or more emulsifiers.

6. Solution according to any one of the preceding claims, wherein said solution contains a nonionic emulsifier.

7. Solution according to any one of claims 1 to 4, wherein said solution contains from 0 to 20 % by weight of emulsifier.

8. Solution according to any one of the preceding claims containing eugenol.

9. CIPC solution according to any one of the preceding claims containing clove oil.

10. Method for treating bulbs or tubers using the solution according to any one of the preceding claims.

11. Method according to claim 10 for the antigerminative treatment of potatoes.

12. Method according to either claim 10 or claim 11, wherein said solution is applied by thermonebulisation.

13. Method according to any one of claims 10, 11 or 12, wherein the solution is applied at a temperature of between 230 and 250 °C.

14. Use of eugenol, isoeugenol or a salt thereof or mixture thereof, or clove oil to solubilise CIPC.

15. Method for preparing CIPC solutions, comprising the step consisting of solubilising CIPC in the presence of eugenol, isoeugenol, clove oil, salts thereof and/or mixtures thereof.

## Patentansprüche

1. 3-Chlorphenylisopropylcarbamat- (CIPC) -Lösung, die Eugenol, Isoeugenol, Nelkenöl, deren Salze und/oder deren Mischungen enthält.

2. Lösung gemäß Anspruch 1, wobei die Lösung 50 bis 80 Gew.-% CIPC im Verhältnis zu dem Gesamtvolumen der Lösung enthält.

3. Lösung gemäß Anspruch 1 oder 2, wobei die Lösung 30 bis 60 Gew.-% Eugenol, Isoeugenol, Nelkenöl, ihrer Salze und/oder ihrer Mischungen im Verhältnis zu dem Gesamtvolumen der Lösung enthält.

4. Lösung gemäß einem der vorhergehenden Ansprüche, wobei die Lösung 30 bis 40 Gew.-% Eugenol, Isoeugenol, Nelkenöl, ihrer Salze und/oder ihrer Mischungen im Verhältnis zu dem Gesamtvolumen der Lösung enthält.

5. Lösung gemäß einem der vorhergehenden Ansprüche, wobei die Lösung einen oder mehrere Emulgatoren enthält.

6. Lösung gemäß einem der vorhergehenden Ansprüche, wobei die Lösung einen nichtionischen Emulgator enthält.

7. Lösung gemäß einem der Ansprüche 1 bis 4, wobei die Lösung 0 bis 20 Gew.-% Emulgator enthält.

8. Lösung gemäß einem der vorhergehenden Ansprüche, die Eugenol enthält.

9. CIPC-Lösung gemäß einem der vorhergehenden Ansprüche, die Nelkenöl enthält.

10. Verfahren zum Behandeln von Zwiebeln und Knollen mittels der Lösung gemäß einem der vorhergehenden Ansprüche.

11. Verfahren gemäß Anspruch 10 für die keimungshemmende Behandlung von Kartoffeln.

12. Verfahren gemäß Anspruch 10 oder 11, wobei die Lösung durch Thermozerstäubung aufgebracht wird.

13. Verfahren gemäß einem der Ansprüche 10, 11 oder 12, wobei die Lösung mit einer Temperatur zwischen 230 und 250°C aufgebracht wird.

14. Verwendung von Eugenol, Isoeugenol oder von einem ihrer Salze oder ihrer Mischung oder von Nelkenöl, um das CIPC zu solubilisieren.

15. Verfahren zum Herstellen von CIPC-Lösungen, das den Schritt aufweist, der darin besteht, CIPC in Gegenwart von Eugenol, Isoeugenol, Nelkenöl, ihrer Salze und/oder ihrer Mischungen zu solubilisieren.
